# EUROPEAN PATENT SPECIFICATION

(11) **EP 3 919 954 B1**
(45) Date of publication and mention of the grant of the patent: **31.07.2024**
(21) Application number: 20853509.6
(22) Date of filing: 28.12.2020
(51) Int. Cl.: G02B 6/44, G02B 6/38

(54) **OPTICAL CABLE CONNECTION DEVICE**
OPTISCHE KABELVERBINDUNGSVORRICHTUNG
DISPOSITIF DE CONNEXION DE CÂBLE OPTIQUE

(30) Priority: 07.04.2020 CN 202020492658 U
(43) Date of publication of application: 08.12.2021
(60) Divisional application: 24163516.8
(73) Proprietor: Huawei Technologies Co., Ltd., Shenzhen, Guangdong 518129 (CN)
(72) Inventor: WANG, Wei, Shenzhen, Guangdong 518129 (CN); YANG, Bo, Shenzhen, Guangdong 518129 (CN); SHU, Siwen, Shenzhen, Guangdong 518129 (CN)
(74) Representative: Goddar, Heinz J.
(86) International application number: PCT/CN2020/140364
(87) International publication number: WO 2021/203750

(56) References cited:
- CN-A- 1 119 741
- CN-A- 109 713 469
- CN-A- 110 542 952
- CN-U- 202 904 070
- CN-U- 209 784 588
- US-A- 5 235 665
- US-A1- 2009 174 154
- US-A1- 2019 101 709
- US-A1- 2020 049 921
- US-B2- 7 881 576
- US-B2- 9 703 051

## Description

### TECHNICAL FIELD

This application relates to the field of optical fiber transmission technologies, and in particular, to an optical cable connection apparatus.

### BACKGROUND

As optical fiber network technologies continue to evolve, operators and end users have increasingly higher requirements for deployment. For example, during access of an optical fiber user, construction from an equipment room to a user end cannot be completed at a time due to uncertain provisioning time and maintenance time of the user end. However, when a service is required by the user end, the service needs to be quickly provisioned in a short time to meet a customer's requirement in a timely manner. Therefore, a higher requirement is imposed on an early-stage construction of optical cable deployment.

In the prior art, an operator builds a dedicated central equipment room in a certain area to provide network input for the area, and provides a fiber distribution terminal (fiber distribution terminal, FDT), in a residential area or along a street, for managing an optical cable in the residential area or the street and a fiber access terminal (fiber access terminal, FAT), in a corridor where the user is located, for managing an optical cable in the corridor. After being led out from the central equipment room, a distribution optical cable sequentially passes through the FDT in the residential area or street and the FAT in the corridor. Then, when the user end needs to activate the service, an access terminal box (access terminal box, ATB) is disposed at a house of the user, and the optical cable of the FAT in the corridor is connected to a drop optical cable at the house of the user, to deploy the optical cable between the operator and the end user.

However, if the house of the user is an entire building in a villa area, the FAT cannot be deployed in the corridor. If the FAT is deployed in a public area, a right of way is required, which increases construction costs and time. If the optical cable is directly led out from the FDT in the residential area or street into the house of the user, construction is difficult and inefficient.

US 2020/049921 A1 describes a modular fiber optic distribution system for facilitating adding components to a terminal housing over time. The system is configured to allow components (e.g., inserts, add-on modules, etc.) to be added to the terminal housing over time to expand capacity, provide upgrades and to provide forward and backward compatibility.

US 9703051 B2 describes a connector housing apparatus for allowing field engineers or technicians to run cable point to point, and to protect the connection in an environmentally sealed, crush resistant housing. The connector housing apparatus includes a connector housing body, two sealing boots, two sealing elements, a fiber optic adapter, a fiber optic adapter insert that holds the fiber optic adapter and two fiber optic pigtails connected to two fiber optic cables. Each boot has two seal points. The first seal is between the fiber optic cable, the sealing element, and the tapered portion of the sealing boot. The second seal is between the interference lip on the sealing boot and the interference lip on the connector housing body.

US 5235665 A describes a branching device for fibre-optic cables, consisting essentially of two half-casings which can be joined together and contain means for connection to a multi-fibre/fibre-optic unit and means for connection to a plurality of single-fibre/fibre-optic units, the half-casings being shaped to form a cavity arranged to contain a plurality of optical fibres, the cavity being of essentially annular shape and having a width greater than the thickness determined by the plurality of separate optical fibres within the device, the optical fibres within the branching device which connect together the means for connection to a multi-fibre/fibre-optic unit and the means for connection to a plurality of single-fibre/fibre-optic units having a length greater than the length of the minimum development of the annular cavity.

US 2019/101709 A1 describes a female fiber optic connector with a body. In one example, features of a fiber optic connector and a fiber optic adapter are integrated into one assembly. In another example, a female optic connector is provided with a simple structure having a pre-assembled ferrule alignment sleeve including a ferrule. The connector body includes means, e.g. threads interface, for interlocking with a twist to lock coupler of a male optical fiber connector.

US 9671569 B2 describes a cable sealing device including an attaching part securable to the cable; a fixation part adapted to be mountable on the attaching part; and a sealing part. The attaching part includes outer locking faces. The fixation part has inner abutment faces adapted to co-operate with the outer locking faces to axially and rotationally lock the fixation part relative to the attaching part. The sealing part includes an inner seal and an outer seal. The sealing part also includes a second securing arrangement that is configured to engage a first securing arrangement of the fixation part to axially and rotationally lock the sealing part to the fixation part.

### SUMMARY

This application provides an optical cable connection apparatus, to reduce construction costs for optical cable deployment, shorten a construction period, reduce construction difficulty, and greatly improve construction efficiency.

This application provides an optical cable connection apparatus, configured to connect an external optical cable and a drop optical cable. The apparatus includes:
a first connection mechanism and a second connection mechanism, where the first connection mechanism is detachably connected to the second connection mechanism.

The first connection mechanism includes a first connection assembly, and the second connection mechanism includes a second connection assembly, where one end of the first connection assembly is connected to the external optical cable.

When the first connection mechanism is connected to the second connection mechanism, the other end of the first connection assembly is connected to one end of the second connection assembly, and the other end of the second connection assembly is connected to the drop optical cable.

The invention provides an optical cable connection apparatus according to the appended claims. The first connection mechanism is detachably connected to the second connection mechanism. The first connection mechanism includes the first connection assembly, and the second connection mechanism includes the second connection assembly, where the one end of the first connection assembly is connected to the external optical cable. When the first connection mechanism is connected to the second connection mechanism, the other end of the first connection assembly is connected to the one end of the second connection assembly, and the other end of the second connection assembly is connected to the drop optical cable. In this way, the optical cable connection apparatus may be buried in a garden or yard of a house of the user, and there is no need to apply for a right of way in a public area. Therefore, a problem that an optical cable cannot be disposed in a corridor area can be resolved, reducing construction costs and a construction period of optical cable deployment. In addition, connecting the external optical cable and the drop optical cable by using the optical cable connection apparatus can further reduce construction difficulty in optical cable deployment, and greatly improve construction efficiency.

The first connection mechanism includes a first housing, where the first connection assembly is located inside the first housing, and a first end of the first housing includes a first opening through which the external optical cable passes. In this way, the external optical cable may enter the first housing through the first opening, and is connected to the first connection assembly inside the first housing. The first housing can protect the first connection assembly and a joint between the first connection assembly and the external optical cable.

The first connection mechanism further includes a first body structure, where the first connection assembly is disposed on the first body structure. One end of the first body structure is located inside the first housing, the other end of the first body structure extends outward from a second end of the first housing, and the second end of the first housing is connected to the first body structure.

The second connection mechanism is detachably connected to the one end of the first body structure extending outward, wherein the second connection mechanism is in a threaded connection with the one end of the first body structure extending outward.

The first body structure is disposed in the first connection mechanism and is connected to the first housing, and the first connection assembly is disposed on the first body structure, improving stability of fastening the first connection assembly in the first housing, and avoiding a problem, for example, the first connection assembly is loose or falls off from the first connection mechanism. In addition, the second connection mechanism is detachably connected to the one end of the first body structure extending outward. This facilitates installation and removal between the second connection mechanism and the first body structure, and greatly facilitate subsequent related maintenance work.

In a possible implementation, the first connection assembly includes an adapter and a connector, where one end of the connector is inserted into and connected to one end of the adapter, and the other end of the connector is equipped with a pigtail fiber. The external optical cable passes through the first opening and is connected to the pigtail fiber.

The other end of the adapter is configured to connect to the one end of the second connection assembly.

The first connection assembly includes the adapter and the connector. The one end of the connector is inserted into the adapter, the other end of the connector is equipped with the pigtail fiber, where the pigtail fiber is connected to the external optical cable. An end that is of the adapter and that is away from the connector is connected to the second connection assembly. This facilitates a connection between the external optical cable and the second connection assembly.

The first body structure includes a first section and a second section that is located inside the first housing. The first connection assembly is disposed on the first section. The second section has a first through hole through which the external optical cable passes, and the first through hole is connected to the first opening.

A part of the first section is located inside the first housing and is connected to the second end of the first housing, and a part of the first section is disposed outside the first housing.

The first body structure includes the first section and the second section. The first connection assembly is disposed on the first section, and the second section has a first through hole through which the external optical cable passes. The external optical cable enters the first housing through the first through hole on the second section and is connected to the first connection assembly on the first section. This prevents the external optical cable from detaching from the first housing when the external optical cable is connected directly to the first connection assembly through the first opening.

In a possible implementation, the second section includes a transition member and a support member, where the support member is pressed against an outer side of the transition member. That the support member is pressed against an outer side of the transition member further improves stability of installing the external optical cable in the first housing.

In a possible implementation, the support member includes a plurality of reinforcing ribs, there is a wedge in an outer sidewall of the transition member, and the reinforcing rib is disposed between two adjacent wedges. Alternate clamping between the wedges and the reinforcing ribs can achieve strengthening and fastening of the support member on the transition member.

In a possible implementation, a fastener is further disposed on an end that is of the second section and that is away from the first section, where the fastener includes a first sealing member and a plurality of first connection plates disposed on an outer side of the first sealing member. The first connection plates are disposed along a circumferential direction of the fastener.

A second through hole is disposed on the first sealing member, where one end of the second through hole is connected to the first opening, and the other end of the second through hole is connected to the first through hole.

When the external optical cable passes through the second through hole on the first sealing member, a sidewall of the second through hole may closely fit an outer wall of the external optical cable, improving sealing performance between the external optical cable and the first connection mechanism. In addition, the first connection plate is disposed on an outer side of the first sealing member. This further improves structural strength of the fastener.

In a possible implementation, a transition plate is connected between the first section and the second section, and at least one fastening member is disposed on the transition plate.

The pigtail fiber is wound around the fastening member, or the external optical cable is wound around the fastening member, or both the pigtail fiber and the external optical cable are wound around the fastening member.

By disposing the fastening member, the pigtail fiber and the external optical cable are wound around the fastening member, to reserve a sufficient length of the pigtail fiber and the external optical cable inside the first housing. In this way, if a joint between the pigtail fiber and the external optical cable is disconnected during a use process, the reserved length wound around the fastening member may be used to re-splice the pigtail fiber and the external optical cable, to facilitate maintenance of the optical cable connection apparatus.

In a possible implementation, a gap is further disposed at a position that is of the transition plate and that is close to the fastening member, where the gap is used to enable the pigtail fiber or the external optical cable to pass from one side of the transition plate to the other side of the transition plate. After being wound around the fastening member on one side of the transition plate, the pigtail fiber or the external optical cable may pass through the gap to the other side of the transition plate, so that the pigtail fiber or the external optical cable may continue to be wound around the fastening member on the other side of the transition plate. This ensures the reserved length of the pigtail fiber or the external optical cable, and provides a larger reserved space for subsequent maintenance.

In a possible implementation, the pigtail fiber is spliced and connected to the external optical cable by using a splicing chip. This enhances structural strength of the joint between the pigtail fiber and the external optical cable.

In a possible implementation, the first housing includes an inner housing and an outer housing sleeved outside the inner housing. An annular space is formed between the outer housing and the inner housing, and a coil is wound around inside the annular space.

The first opening is disposed at a first end of the outer housing.

The coil is disposed on the first housing of the first connection mechanism, so that the first connection mechanism can be easily identified. When the first connection mechanism is buried underground, a location of the first connection mechanism can be sensed by using a scanning device.

In a possible implementation, the second connection assembly includes a pre-connector, where one end of the pre-connector is inserted into and connected to the other end of the adapter, and the other end of the pre-connector is connected to the drop optical cable. The pre-connector is disposed, where the one end of the pre-connector is connected to the drop optical cable, and the other end of the pre-connector is connected to the end that is of the adapter and that is away from the connector. The adapter is further connected to the connector, and the pigtail fiber of the connector is connected to the external optical cable. In this way, the drop optical cable can be connected to the external optical cable.

In a possible implementation, the second connection mechanism includes a second housing, where the second connection assembly is located inside the second housing. One end of the second housing includes a second opening through which the drop optical cable passes, and the other end of the second housing is detachably connected to the first section located outside the first housing. In this way, the drop optical cable may enter the second housing through the second opening, and is connected to the second connection assembly inside the second housing. The second housing can protect the second connection assembly and a joint between the second connection assembly and the drop optical cable.

In a possible implementation, the apparatus further includes a cover body.

When the first connection mechanism is connected to the second connection mechanism, the cover body is detachably connected to an end that is of the second housing and that is away from the first connection mechanism.

When the first connection mechanism is not connected to the second connection mechanism, the cover body is detachably connected to the first section of the first body structure.

When the first connection mechanism is connected to the second connection mechanism, the cover body is detachably disposed at the end that is of the second housing and that is away from the first connection mechanism. This prevents, after the optical cable connection apparatus is buried underground, underground sediment from entering the optical cable connection apparatus at the end that is of the second housing and that is away from the first connection mechanism, and affecting normal use of the optical cable connection apparatus. Similarly, when the first connection mechanism is not connected to the second connection mechanism, the cover body is detachably disposed on the first section of the first body structure. This prevents, after the first connection mechanism is buried underground, underground sediment from entering the first connection mechanism at the first section of the first body structure, and affecting normal use of the optical cable connection apparatus.

In a possible implementation, a side of the cover body includes a third opening, where a detachable barrier plate is disposed at the third opening. In this way, when no service is activated on a client end, the barrier plate is installed on the third opening of the cover body, to seal the optical cable connection apparatus. When the client end needs to activate the service, the barrier plate is removed from the third opening of the cover body, and the drop optical cable may conveniently enter the optical cable connection apparatus through the third opening. This facilitates a subsequent connection between the drop optical cable and the external optical cable.

### BRIEF DESCRIPTION OF DRAWINGS

FIG. 1A is a diagram of an application scenario of an optical cable connection apparatus according to an embodiment of this application;
FIG. 1B is a first schematic diagram of an optical cable connection apparatus according to an embodiment of this application;
FIG. 2 is a second schematic diagram of an optical cable connection apparatus according to an embodiment of this application;
FIG. 3 is a schematic diagram of a first connection mechanism of an optical cable connection apparatus according to an embodiment of this application;
FIG. 4 is a first schematic diagram of a first body structure of a first connection mechanism of an optical cable connection apparatus according to an embodiment of this application;
FIG. 5 is a second schematic diagram of a first body structure of a first connection mechanism of an optical cable connection apparatus according to an embodiment of this application;
FIG. 6 is a third schematic diagram of a first body structure of a first connection mechanism of an optical cable connection apparatus according to an embodiment of this application;
FIG. 7 is a first schematic diagram of a first housing of a first connection mechanism of an optical cable connection apparatus according to an embodiment of this application;
FIG. 8 is a second schematic diagram of a first housing of a first connection mechanism of an optical cable connection apparatus according to an embodiment of this application;
FIG. 9 is a first schematic diagram of a second connection mechanism of an optical cable connection apparatus according to an embodiment of this application;
FIG. 10 is a second schematic diagram of a second connection mechanism of an optical cable connection apparatus according to an embodiment of this application;
FIG. 11 is a schematic diagram when a cover body is connected to a first connection mechanism of an optical cable connection apparatus according to an embodiment of this application; and
FIG. 12 is a schematic diagram when a cover body is connected to a second connection mechanism of an optical cable connection apparatus according to an embodiment of this application.

Description of reference numerals:
1-optical cable connection apparatus; 10-first connection mechanism; 101-first connection assembly; 1011-adapter; 1012-connector; 10121-pigtail fiber; 102-first housing; 1021-first end of the first housing; 1022-first opening; 1023-second end of the first housing; 1024-inner housing; 10241-first inner screw thread; 1025-outer housing; 10251-first end of the outer housing; 10252-second end of the outer housing; 10253-second accommodation groove; 1026-annular space; 1027-coil; 103-first body structure; 1031-first section; 10311-clamping groove; 10312-first groove; 10313-first sealing ring; 10314-first outer screw thread; 10315-second outer screw thread; 10316-third groove; 10317-third sealing ring; 10318-third outer screw thread; 10319-lifting lug; 1032-second section; 10321-first through hole; 10322-transition member; 103221-wedge; 10323-support member; 103231-reinforcing rib; 1033-fastener; 10331-first sealing member; 103311-second through hole; 10332-first connection plate; 10333-second groove; 10334-second sealing ring; 1034-transition plate; 10341-gap; 10342-first accommodation groove; 1035-fastening member; 20-second connection mechanism; 201-second connection assembly; 2011-pre-connector; 202-second housing; 2021-second opening; 2022-third accommodation groove; 2023-second sealing member; 20231-third through hole; 2024-second inner screw thread; 2025-fourth groove; 2026-fourth sealing ring; 2027-second connection plate; 30-cover body; 301-third opening; 302-barrier plate; 303-third inner screw thread; 2-FDT; 3-ATB; 4-external optical cable; 5-drop optical cable.

### DESCRIPTION OF EMBODIMENTS

Some terms used in embodiments of this application are used to merely explain the embodiments of this application, with no intention to limit this application. The following describes implementations in the embodiments of this application in detail with reference to accompanying drawings.

Fiber to the X (Fiber to the X, FTTx) is a new-generation optical fiber subscriber access network, and is used to connect a telecom operator and an end user. During a process of optical fiber access, optical cable deployment from a telecom operator to an end user cannot be completed at a time due to uncertain provisioning time and maintenance time of a user end. However, when the user end applies for a service, the service needs to be quickly provisioned in a short time. In the prior art, after being led out from a central equipment room, a distribution optical cable is sequentially connected to a fiber distribution terminal (fiber distribution terminal, FDT) in a residential area or a street where the user belongs and a fiber access terminal (fiber access terminal, FAT) in a corridor where the user is located. Then, the optical cable is led into an access terminal box (access terminal box, ATB) in a house of the user from the FAT in the corridor where the user is located. In this way, the optical cable is deployed between the operator and the end user, ensuring that the service can be quickly provisioned to meet a requirement of the user end in the future. However, if the house of the user is an entire building in a villa area, the FAT cannot be deployed in the corridor. If the FAT is deployed in a public area, a right of way is required, which increases construction costs and period. If the optical cable is directly led out from the FDT in the street where the user located into the house of the user, construction is difficult and inefficient.

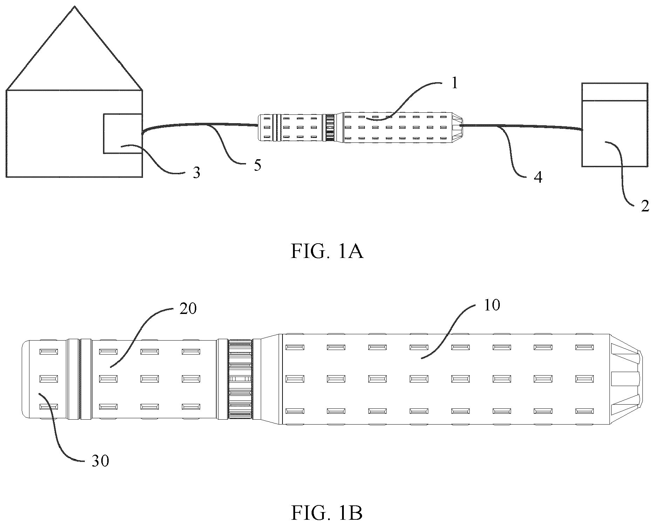

In view of this, as shown in FIG. 1A, an embodiment of this application provides an optical cable connection apparatus 1, configured to connect an external optical cable 4 of a fiber distribution terminal 2 in a residential area or a street to which a user belongs to a drop optical cable 5 of an access terminal box 3 in the house of the user. In actual implementation, the optical cable connection apparatus 1 may be buried in a garden or yard of the house of the user, and there is no need to apply for a right of way in a public area. This resolves a problem that an optical cable cannot be disposed in a corridor area, and reduces construction costs and a construction period of optical cable deployment. In addition, connecting the external optical cable 4 and the drop optical cable 5 by using the optical cable connection apparatus 1 can further reduce construction difficulty in optical cable deployment, and greatly improve construction efficiency.

As shown in FIG. 1B, the optical cable connection apparatus 1 provided in this embodiment of this application includes a first connection mechanism 10 and a second connection mechanism 20, where the first connection mechanism 10 is detachably connected to the second connection mechanism 20.

In an optional implementation, the first connection mechanism 10 may be in a threaded connection with the second connection mechanism 20.

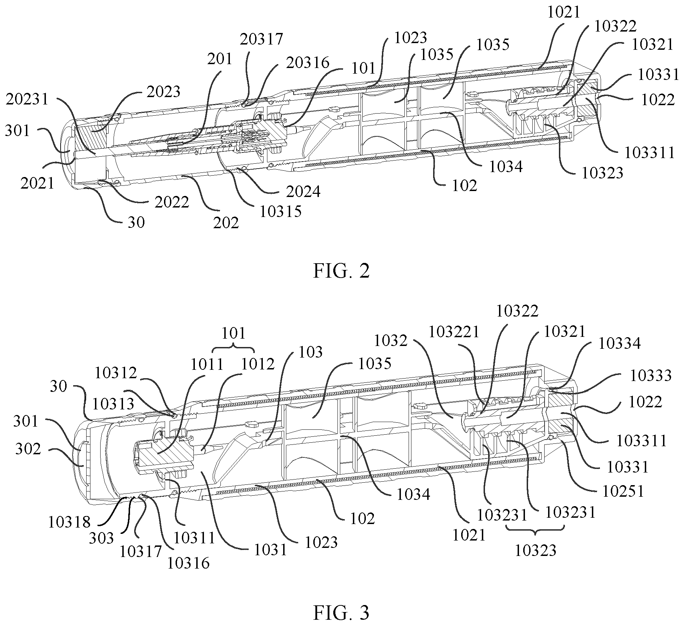

As shown in FIG. 2, the first connection mechanism 10 includes a first connection assembly 101, and the second connection mechanism 20 includes a second connection assembly 201. One end of the first connection assembly 101 is connected to the external optical cable 4. When the first connection mechanism 10 is connected to the second connection mechanism 20, the other end of the first connection assembly 101 is connected to one end of the second connection assembly 201, and the other end of the second connection assembly 201 is connected to the drop optical cable 5. In this way, a connection between the external optical cable 4 and the drop optical cable 5 is implemented. This reduces construction costs for optical cable deployment, shortens a construction period, reduces construction difficulty, and greatly improves construction efficiency.

In this embodiment of this application, as shown in FIG. 3, the first connection mechanism 10 includes a first housing 102. The first connection assembly 101 is located inside the first housing 102. A first end 1021 of the first housing includes a first opening 1022 through which the external optical cable 4 passes. In this way, the external optical cable 4 may enter the first housing 102 through the first opening 1022, and is connected to the first connection assembly 101 inside the first housing 102. The first housing 102 can protect the first connection assembly 101 and a joint between the first connection assembly 101 and the external optical cable 4.

Still refer to FIG. 3. The first connection mechanism 10 further includes a first body structure 103. The first connection assembly 101 is disposed on the first body structure 103. One end of the first body structure 103 is located inside the first housing 102, the other end of the first body structure 103 extends outward from a second end 1023 of the first housing, and the second end 1023 of the first housing 102 is connected to the first body structure 103. The first body structure 103 is disposed in the first connection mechanism 10 and is connected to the first housing 102, and the first connection assembly 101 is disposed on the first body structure 103. This improves stability of fastening the first connection assembly 101 in the first housing 102, and avoids a problem, for example, the first connection assembly 101 is loose or falls off from the first connection mechanism 10.

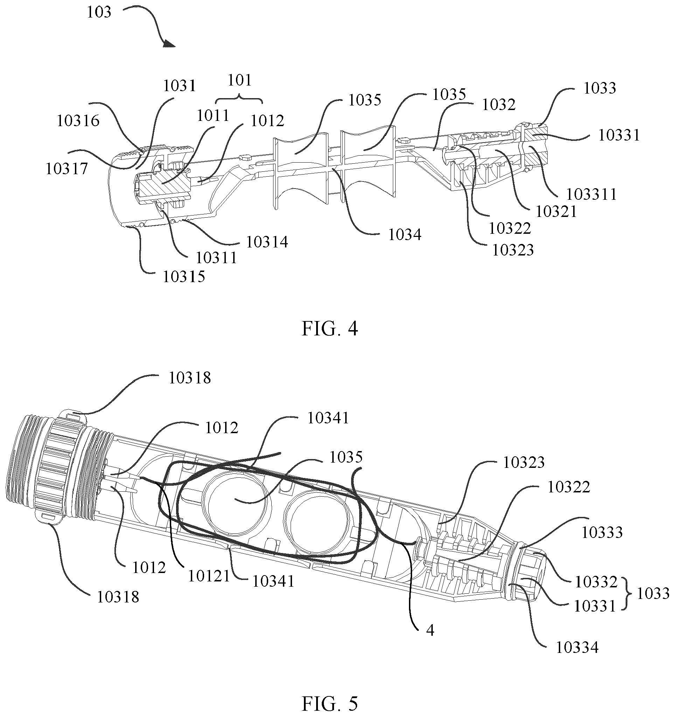

The first connection assembly 101 includes an adapter 1011 and a connector 1012. One end of the connector 1012 is inserted into and connected to one end of the adapter 1011, and the other end of the connector 1012 is equipped with a pigtail fiber 10121 (refer to FIG. 5). The external optical cable 4 passes through the first opening 1022 and is connected to the pigtail fiber 10121. The other end of the adapter 1011 is configured to connect to one end of the second connection assembly 201. The first connection assembly 101 includes the adapter 1011 and the connector 1012. One end of the connector 1012 is inserted into the adapter 1011, the other end of the connector 1012 is equipped with the pigtail fiber 10121. The pigtail fiber 10121 is connected to the external optical cable 4. An end that is of the adapter 1011 and that is away from the connector 1012 is connected to the second connection assembly 201. This facilitates a connection between the external optical cable 4 and the second connection assembly 201.

It should be noted that, in this embodiment of this application, a specific specification and quantity of connectors 1012 may be flexibly set based on a specification of the adapter 1011. For example, when only one connector 1012 can be inserted into one end of the adapter 1011, the first connection assembly 101 in this embodiment of this application correspondingly includes one connector 1012. In this case, the optical cable connection apparatus 1 may be connected to one drop optical cable 5. When two or more connectors 1012 may be inserted into one end of the adapter 1011 at the same time, the first connection assembly 101 in this embodiment of this application correspondingly includes two or more connectors 1012. In this case, the optical cable connection apparatus 1 may be connected to drop optical cables 5 of houses of different users (for example, users on different floors) in a same villa area at the same time. This may further expand an application scope of the optical cable connection apparatus 1.

As shown in FIG. 4, the first body structure 103 includes a first section 1031 and a second section 1032 that is located inside the first housing 102. The first connection assembly 101 is disposed on the first section 1031. The second section 1032 has a first through hole 10321 through which the external optical cable 4 passes, and the first through hole 10321 is connected to the first opening 1022 on the first housing 102. In this way, the external optical cable 4 enters the first housing 102 through the first through hole 10321 on the second section 1032 and is connected to the first connection assembly 101 on the first section 1031. This prevents the external optical cable 4 from detaching from the first housing 102 when the external optical cable 4 is connected directly to the first connection assembly 101 through the first opening 1022.

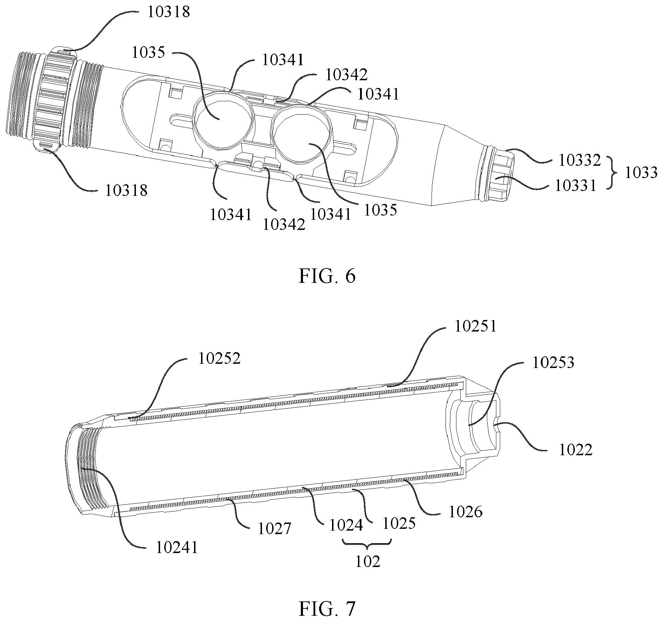

In a possible implementation, the second end 1023 of the first housing 102 is connected to the first body structure 103 by using a screw thread. For example, a first inner screw thread 10241 (refer to FIG. 7) is disposed in an inner wall of the second end 1023 of the first housing 102, and a first outer screw thread 10314 (refer to FIG. 4) that is in a threaded connection with the first inner screw thread 10241 is disposed on the first section 1031 of the first body structure 103. In this way, the second end 1023 of the first housing 102 is connected to the first body structure 103 by using the first inner screw thread 10241 and the first outer screw thread 10314.

To improve sealing performance of a joint between the first housing 102 and the first body structure 103, as shown in FIG. 3, a first groove 10312 is disposed at a joint between the first section 1031 and the first housing 102, and a first sealing ring 10313 is disposed in the first groove 10312. Alternatively, in some other embodiments, a first groove 10312 may be disposed at a joint between the first housing 102 and the first section 1031, and a first sealing ring 10313 is disposed in the first groove 10312.

It should be noted that, as shown in FIG. 3, a part of the first section 1031 is located inside the first housing 102 and is connected to the second end 1023 of the first housing, and a part of the first section 1031 is disposed outside the first housing 102.

A clamping groove 10311 is disposed in an inner wall of the first section 1031. The clamping groove 10311 is configured to fasten the adapter 1011. The clamping groove 10311 configured to fasten the adapter 1011 is disposed on the first section 1031 of the first connection assembly 103, so that the adapter 1011 can be firmly fastened. This avoids a case in which the adapter 1011 falls off and is loose because the optical cable connection apparatus 1 shakes.

Refer to FIG. 4. In this embodiment of this application, the second section 1032 may include a transition member 10322 and a support member 10323. The support member 10323 presses against an outer side of the transition member 10322. That the support member 10323 presses against an outer side of the transition member 10322 further improves stability of installing the external optical cable 4 in the first housing 102. Specifically, as shown in FIG. 3, the support member 10323 may include a plurality of reinforcing ribs 103231, there is a wedge 103221 in an outer sidewall of the transition member 10322, and a reinforcing rib 103231 is disposed between two adjacent wedges 103221. Alternative clamping between the wedges 103221 and the reinforcing ribs 103231 can achieve strengthening and fastening of the support member 10323 on the transition member 10322.

In a possible implementation, a fastener 1033 is further disposed on an end that is of the second section 1032 and that is away from the first section 1031. As shown in FIG. 5, the fastener 1033 includes a first sealing member 10331 and a plurality of first connection plates 10332 disposed on an outer side of the first sealing member 10331. The first connection plates 10332 are disposed along a circumferential direction of the fastener 1033. As shown in FIG. 4, a second through hole 103311 is disposed on the first sealing member 10331, where one end of the second through hole 103311 is connected to the first opening 1022 on the first housing 102, and the other end of the second through hole 103311 is connected to the first through hole 10321. When the external optical cable 4 passes through the second through hole 103311 on the first sealing member 10331, a sidewall of the second through hole 103311 may closely fit an outer wall of the external optical cable 4, improving sealing performance between the external optical cable 4 and the first connection mechanism 10. In addition, the first connection plate is disposed on an outer side of the first sealing member 10331. This further improves structural strength of the fastener 1033.

Still refer to FIG. 4. A transition plate 1034 is connected between the first section 1031 and the second section 1032 that are of the first connection assembly 103, and at least one fastening member 1035 is disposed on the transition plate 1034. In this way, the pigtail fiber 10121 of the connector 1012 may be wound around the fastening member 1035, or the external optical cable 4 may be wound around the fastening member 1035 after entering the first housing 102 through the first opening 1022, or both the pigtail fiber 10121 and the external optical cable 4 may be wound around the fastening member 1035 at the same time.

It should be noted that, by disposing the fastening member 1035, the pigtail fiber 10121 and the external optical cable 4 are wound around the fastening member 1035, to reserve a sufficient length of the pigtail fiber 10121 and the external optical cable 4 inside the first housing 102. In this way, if a joint between the pigtail fiber 10121 and the external optical cable 4 is disconnected during a use process, the reserved length wound around the fastening member 1035 may be used to re-splice the pigtail fiber 10121 and the external optical cable 4, to facilitate maintenance of the optical cable connection apparatus 1.

In this embodiment of this application, manners of disposing the fastening member 1035 may include but are not limited to the following two possible implementations:

In a possible implementation, at least one fastening member 1035 is disposed on one side of the transition plate 1034. FIG. 5 is a front-side schematic diagram of the first connection assembly 103. FIG. 6 is a rear-side schematic diagram of the first connection assembly 103. For example, at least one fastening member 1035 may be disposed on a side of the front-side schematic diagram shown in FIG. 5. Alternatively, at least one fastening member 1035 may be disposed on a side of the rear-side schematic diagram shown in FIG. 6.

In a possible implementation, at least one fastening member 1035 is disposed on both sides of the transition plate 1034. For example, at least one fastening member 1035 may be disposed on both sides of the transition plate 1034. As shown in FIG. 4, two fastening members 1035 are disposed on two sides of the transition plate 1034.

It should be noted that the fastening member 1035 in this embodiment of this application may be a prism, a cylinder, or the like. A specific structure of the fastening member 1035 is not limited in this embodiment of this application, and is not limited to the foregoing examples. For example, as shown in FIG. 6, the fastening member 1035 may be a cylinder.

It may be understood that the fastening member 1035 may be of a hollow structure, or may be of a solid structure. For example, the fastening member 1035 may be a hollow cylinder in FIG. 6.

Still refer to FIG. 6. When a fastening member 1035 is disposed on each of two sides of the transition plate 1034, a gap 10341 may be further disposed at a position that is of the transition plate 1034 and that is close to the fastening member 1035. The gap 10341 is used to enable the pigtail fiber 10121 or the external optical cable 4 to pass from one side of the transition plate 1034 to the other side of the transition plate 1034. After being wound around the fastening member 1035 on one side of the transition plate 1034, the pigtail fiber 10121 or the external optical cable 4 may pass through the gap 10341 to the other side of the transition plate 1034, so that the pigtail fiber 10121 or the external optical cable 4 may continue to be wound around the fastening member 1035 on the other side of the transition plate 1034. This ensures the reserved length of the pigtail fiber 10121 or the external optical cable 4, and provides a larger reserved space for subsequent maintenance.

In this embodiment of this application, to enhance structural strength of the joint between the pigtail fiber 10121 and the external optical cable 4, the pigtail fiber 10121 may be spliced and connected to the external optical cable 4 by using a splicing chip (not shown in the figure). In addition, as shown in FIG. 6, a first accommodation groove 10342 may be disposed on the transition plate 1034. The first accommodation groove 10342 is configured to accommodate the splicing chip.

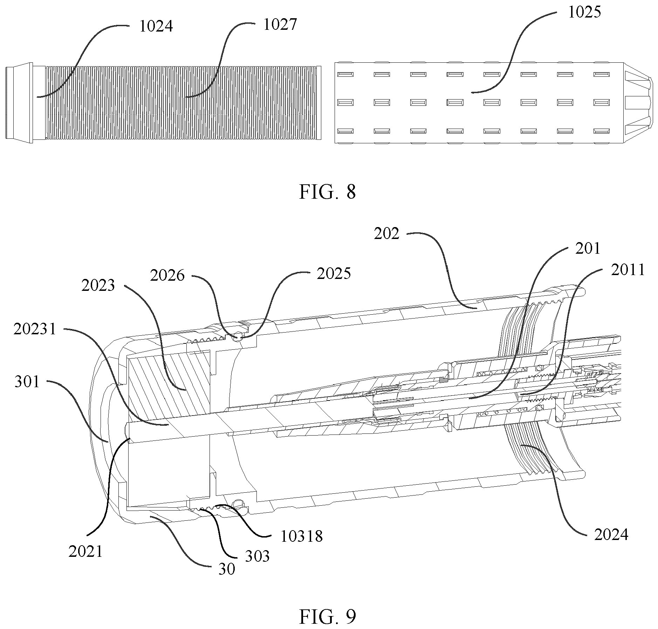

As shown in FIG. 7, the first housing 102 may include an inner housing 1024 and an outer housing 1025 sleeved outside the inner housing 1024. An annular space 1026 is formed between the outer housing 1025 and the inner housing 1024, and a coil 1027 is wound around inside the annular space 1026. Specifically, as shown in FIG. 8, the coil 1027 may be wound around an outer sidewall of the inner housing 1024, and then the outer housing 1025 is sleeved outside the inner housing 1024. The coil 1027 is disposed on the first housing 102 of the first connection mechanism 10, so that the first connection mechanism 10 can be easily identified. When the first connection mechanism 10 is buried underground, a location of the first connection mechanism 10 can be sensed by using a scanning device.

In this embodiment of this application, the first opening 1022 is disposed at a first end 10251 of the outer housing. An end of the inner housing 1024 extends outward from a second end 10252 of the outer housing, and a first inner screw thread 10241 (refer to FIG. 7) is disposed in an inner wall of the end of the inner housing 1024 that extends outward from the outer housing 1025. A first outer screw thread 10314 connected to the first inner screw thread 10241 is disposed on the first section 1031 of the first body structure 103 (refer to FIG. 4).

As shown in FIG. 7, a second accommodation groove 10253 is disposed on a side that is of the outer housing 1025 and that is close to the second section 1032. The second accommodation groove 10253 is configured to accommodate the fastener 1033 disposed at an end of the second section 1032.

To improve sealing performance of a joint between the first housing 102 and the fastener 1033, as shown in FIG. 5, a second groove 10333 may be disposed in an outer wall of the fastener 1033, and a second sealing ring 10334 is disposed in the second groove 10333. Alternatively, in some other embodiments, a second groove 10333 may be disposed in the inner wall of the first housing 102, in other words, at a joint between the first housing 102 and the fastener 1033, and a second sealing ring 10334 is disposed in the second groove 10333.

In this embodiment of this application, as shown in FIG. 9, the second connection assembly 201 may include a pre-connector 2011. One end of the pre-connector 2011 is inserted into and connected to the other end of the adapter 1011, and the other end of the pre-connector 2011 is connected to the drop optical cable 5. It should be noted that a specific structure of the pre-connector 2011 is not limited in this embodiment of this application, as long as the pre-connector 2011 can be inserted into the adapter 1011 to connect the drop optical cable 5 and the adapter 1011.

Still refer to FIG. 9. The second connection mechanism 20 includes a second housing 202. The second connection assembly 201 is located inside the second housing 202. One end of the second housing 202 includes a second opening 2021 through which the drop optical cable 5 can pass, and the other end of the second housing 202 is detachably connected to the first section 1031 located outside the first housing 102. In this way, the drop optical cable 5 may enter the second housing 202 through the second opening 2021, and is connected to the second connection assembly 201 inside the second housing 202. The second housing 202 can protect the second connection assembly 201 and a joint between the second connection assembly 201 and the drop optical cable 5.

It should be noted that, as shown in FIG. 2, the second connection mechanism 20 is detachably connected to the end of the first body structure 103 extending outward. More specifically, the second connection mechanism 20 is in a threaded connection with the end of the first body structure 103 extending outward. For example, a second inner screw thread 2024 (refer to FIG. 2) is disposed in an inner wall of an end that is of the second housing 202 and that faces the first body structure 103. The first section 1031 has a second outer screw thread 10315 on an end that is located outside the first housing 102 (refer to FIG. 2). The second housing 202 is connected to the first section 1031 of the first body structure 103 by using the second inner screw thread 2024 and the second outer screw thread 10315. The second connection mechanism 30 is detachably connected to the end of the first body structure 103 extending outward. This facilitates installation and removal between the second connection mechanism 20 and the first body structure 103, and greatly facilitate subsequent related maintenance work.

In this embodiment of this application, still refer to FIG. 2. A third accommodation groove 2022 is disposed on a side that is of the second housing 202 and that is away from the first connection assembly 101. A second sealing member 2023 is disposed in the third accommodation groove 2022. A third through hole 20231 is disposed on the second sealing member 2023. The third through hole 20231 is connected to the second opening 2021. When the drop optical cable 5 passes through the third through hole 20231 on the second sealing member 2023, a sidewall of the third through hole 20231 may closely fit an outer wall of the drop optical cable 5, improving sealing performance between the drop optical cable 5 and the second connection mechanism 20.

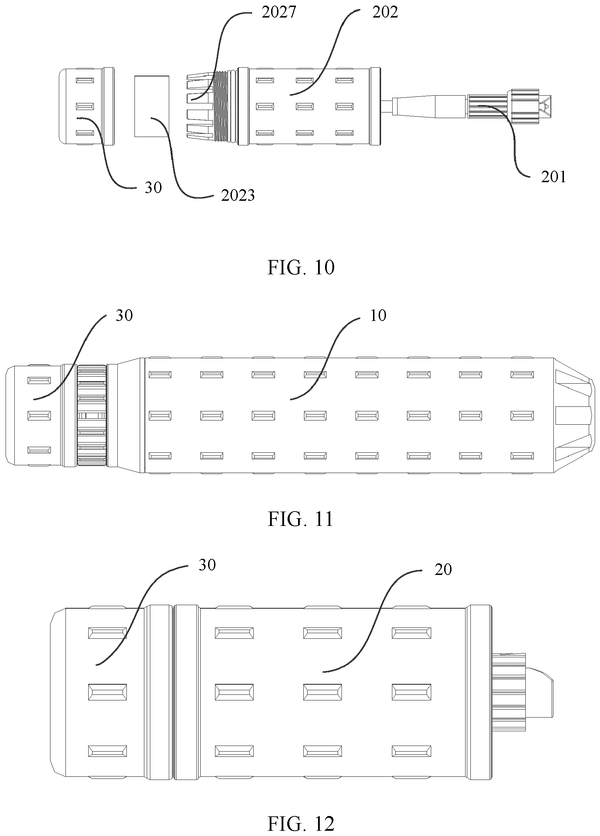

In a possible implementation, as shown in FIG. 10, the third accommodation groove 2022 may include a plurality of second connection plates 2027. The second connection plates 2027 are disposed on an outer side of the second sealing member 2023 along a circumferential direction of the fastener 1033. Disposing the third accommodation groove 2022, in other words, a plurality of second connection plates 2027 on the outer side of the second sealing member 2023, may increase a fitting degree between the third accommodation groove 2022 and the second sealing member 2023.

In addition, the optical cable connection apparatus 1 provided in this embodiment of this application further includes a cover body 30. A side of the cover body 30 has a third opening 301, and a detachable barrier plate 302 is disposed at the third opening 301. In this way, when no service is activated on a client end, the barrier plate 302 is installed on the third opening 301 of the cover body 30, to seal the optical cable connection apparatus 1. When the client end needs to activate a service, the barrier plate 302 is removed from the third opening 301 of the cover body 30, and the drop optical cable 5 may conveniently enter the optical cable connection apparatus 1 through the third opening 301. This facilitates a subsequent connection between the drop optical cable 5 and the external optical cable 4.

When the first connection mechanism 10 is not connected to the second connection mechanism 20, as shown in FIG. 11, the cover body 30 may be connected to an end of the first connection mechanism 10. In other words, the cover body 30 may be detachably connected to the first section 1031 of the first body structure 103. For example, the cover body 30 may be in threaded connection with the first section 1031 of the first body structure 103. As shown in FIG. 3, a third inner screw thread 303 is disposed on the cover body 30, and a third outer screw thread 10318 is disposed on a side that is of the first section 1031 and that is close to the cover body 30. The cover body 30 is cooperatively connected to the first section 1031 of the first body structure 103 by using the third inner screw thread 303 and the third outer screw thread 10318.

The cover body 30 is detachably disposed on the first section 1031 of the first body structure 103. After the first connection mechanism 10 of the optical cable connection apparatus 1 is buried underground, the cover body 30 can prevent underground sediment from entering the first connection mechanism 10 of the optical cable connection apparatus 1 at the first section 1031 of the first body structure 103, and affecting normal use of the optical cable connection apparatus 1.

To improve sealing performance of a joint between the cover body 30 and the first body structure 103, as shown in FIG. 3, a third groove 10316 is disposed on an outer circumference of the joint between the first section 1031 of the first body structure 103 and the cover body 30, and a third sealing ring 10317 is disposed in the third groove 10316. Alternatively, in some other embodiments, a third groove 10316 may be disposed in an inner wall of the cover body 30, in other words, at a joint between the cover body 30 and the first section 1031 of the first body structure 103, and a third sealing ring 10317 is disposed in the third groove 10316.

When the first connection mechanism 10 is connected to the second connection mechanism 20, as shown in FIG. 12, the cover body 30 may be connected to an end that is of the second connection mechanism 20 and that is away from the first connection mechanism 10. In a possible implementation, the cover body 30 may be detachably connected to an end that is of the second housing 202 and that is away from the first connection mechanism 10. For example, the cover body 30 may be in threaded connection with the second housing 202. As shown in FIG. 9, the third inner screw thread 303 is disposed on the cover body 30, and the third outer screw thread 10318 is disposed on the side that is of the second housing 202 and that is close to the cover body 30. The cover body 30 is cooperatively connected to the second housing 202 by using the third inner screw thread 303 and the third outer screw thread 10318.

The cover body 30 is detachably disposed at the end that is of the second housing 202 and that is away from the first connection mechanism 10. After the optical cable connection apparatus 1 is buried underground, the cover body 30 can prevent underground sediment from entering the optical cable connection apparatus 1 at the end that is of the second housing 202 and that is away from the first connection mechanism 10, and affecting normal use of the optical cable connection apparatus 1.

To improve sealing performance of a joint between the cover body 30 and the second housing 202, still referring to FIG. 9, a fourth groove 2025 is disposed on an outer circumference of the joint between the second housing 202 and the cover body 30, and a fourth sealing ring 2026 is disposed in the fourth groove 2025. Alternatively, in some other embodiments, a fourth groove 2025 may be disposed in the inner wall of the cover body 30, in other words, a joint between the cover body 30 and the second housing 202, and a fourth sealing ring 2026 is disposed in the fourth groove 2025.

It should be noted that, when the first connection mechanism 10 is connected to the second connection mechanism 20, as shown in FIG. 3, the third groove 10316 is disposed on an outer circumference of the joint between the first section 1031 and the second housing 202, and the third sealing ring 10317 is disposed in the third groove 10316. Alternatively, in some other embodiments, the third groove 10316 may be disposed in the inner wall of the second housing 202, in other words, at a joint between the second housing 202 and the first section 1031 of the first body structure 103, and the third sealing ring 10317 is disposed in the third groove 10316.

In addition, to facilitate installation and removal of the optical cable connection apparatus 1, a lifting lug 10319 may be further disposed outside the optical cable connection apparatus 1. For example, as shown in FIG. 5, the lifting lug 10319 may be disposed on an end that is of the first section 1031 and that extends outward from the first housing 102.

In an early construction process of cable deployment, the external optical cable 4 is first connected to the first connection assembly 101 of the first connection mechanism 10, and then the first connection mechanism 10 is buried in a garden or a yard of the house of the user in advance. When the user end needs to activate a service, the drop optical cable 5 is connected to the connection assembly 201 of the second connection mechanism 20. After the location of the first connection mechanism 10 is identified by using the scanning device, the first connection mechanism 10 is taken out from the ground. Then, the first connection mechanism 10 and the second connection mechanism 20 are connected by using the first connection assembly 101 in the first connection mechanism 10 and the second connection assembly 201 in the second connection mechanism 20. This implements a connection between the drop optical cable 5 and the external optical cable 4. Compared with the prior art, this embodiment of this application provides the optical cable connection apparatus 1. In this way, there is no need to dispose a node device in the public area near the house of the user. This reduces construction costs for optical cable deployment, shortens a construction period, reduces construction difficulty, and greatly improves construction efficiency.

In the descriptions of the embodiments of this application, it should be noted that, unless otherwise clearly specified and limited, terms "assemble", "connect", and "connect" should be understood in a broad sense. For example, the terms may be used for a fixed connection, a connection through intermediate media, an internal connection between two elements, or an interaction relationship between two elements. Persons of ordinary skill in the art may understand specific meanings of the terms in the embodiments of this application based on specific cases.

In the specification, claims, and accompanying drawings of embodiments of this application, the terms "first", "second", "third", "fourth", and so on (if any) are intended to distinguish between similar objects but do not necessarily indicate a specific order or sequence.

## Claims

1. An optical cable connection apparatus (1), configured to connect an external optical cable (4) and a drop optical cable (5), wherein the apparatus comprises:
a first connection mechanism (10) and a second connection mechanism (20), wherein:
the first connection mechanism (10) is detachably connected to the second connection mechanism (20);
the first connection mechanism (10) comprises a first connection assembly (101), and the second connection mechanism (20) comprises a second connection assembly (201), wherein one end (1021) of the first connection assembly (101) is connected to the external optical cable (4); and
when the first connection mechanism (10) is connected to the second connection mechanism (20), the other end (1023) of the first connection assembly (101) is connected to one end of the second connection assembly (201), and the other end of the second connection assembly (201) is connected to the drop optical cable (5);
wherein the first connection mechanism (10) comprises a first housing (102), the first connection assembly (101) is located inside the first housing (102), and a first end (1021) of the first housing (102) comprises a first opening (1022) through which the external optical cable (4) passes;
wherein the first connection mechanism (10) further comprises a first body structure (103), the first connection assembly (101) is disposed on the first body structure (103), one end of the first body structure (103) is located inside the first housing (102), the other end of the first body structure (103) extends outward from a second end (1023) of the first housing (102), and the second end (1023) of the first housing (102) is connected to the first body structure (103); and
the second connection mechanism (20) is detachably connected to the end of the first body structure (103) extending outward, wherein the second connection mechanism (20) is in a threaded connection with the end of the first body structure (103) extending outward; and
wherein the first body structure (103) comprises a first section (1031) and a second section (1032) that is located inside the first housing (102), the first connection assembly (101) is disposed on the first section (1031), the second section (1032) has a first through hole (10321) through which the external optical cable (4) passes, and the first through hole is connected to the first opening (1022); and
a part of the first section (1031) is located inside the first housing (102) and is connected to the second end (1023) of the first housing (102), and a part of the first section (1031) is located outside the first housing (102).

2. The optical cable connection apparatus (1) according to claim 1, wherein the first connection assembly (101) comprises an adapter (1011) and a connector (1012), one end of the connector (1012) is inserted into and connected to one end of the adapter (1011), the other end of the connector (1012) is equipped with a pigtail fiber (10121), and the external optical cable (4) passes through the first opening (1022) and is connected to the pigtail fiber; and
the other end of the adapter (1011) is configured to connect to the one end of the second connection assembly (201).

3. The optical cable connection apparatus (1) according to claim 2, wherein the second section (1032) comprises a transition member (10322) and a support member (10323), and the support member is pressed against an outer side of the transition member.

4. The optical cable connection apparatus (1) according to claim 3, wherein the support member (10323) comprises a plurality of reinforcing ribs (103231), there is a wedge (103221) in an outer sidewall of the transition member (10322), and the reinforcing rib is disposed between two adjacent wedges.

5. The optical cable connection apparatus (1) according to claim 2, wherein a fastener (1033) is further disposed on an end that is of the second section (1032) and that is away from the first section (1031), the fastener (1033) comprises a first sealing member (10331) and a plurality of first connection plates (10332) disposed on an outer side of the first sealing member, and the first connection plates are disposed along a circumferential direction of the fastener (1033); and
a second through hole (103311) is disposed on the first sealing member (10331), wherein one end of the second through hole is connected to the first opening (1022), and the other end of the second through hole is connected to the first through hole (10321).

6. The optical cable connection apparatus (1) according to claim 2, wherein a transition plate (1034) is connected between the first section (1031) and the second section (1032), and at least one fastening member (1035) is disposed on the transition plate (1034); and
the pigtail fiber (10121) is wound around the fastening member (1035), or the external optical cable (4) is wound around the fastening member (1035), or both the pigtail fiber and the external optical cable are wound around the fastening member (1035).

7. The optical cable connection apparatus (1) according to claim 6, wherein a gap (10341) is further disposed at a position of the transition plate (1034) close to the fastening member (1035), and the gap is used to enable the pigtail fiber (10121) or the external optical cable (4) to pass from one side of the transition plate (1034) to the other side of the transition plate (1034).

8. The optical cable connection apparatus (1) according to claim 2, wherein the pigtail fiber (10121) is spliced and connected to the external optical cable (4) by using a splicing chip.

9. The optical cable connection apparatus (1) according to any one of claims 1 to 8, wherein the first housing (102) comprises an inner housing (1024) and an outer housing (1025) sleeved outside the inner housing (1024), an annular space (1026) is formed between the outer housing (1025) and the inner housing (1024), and a coil (1027) for localizing the first connection mechanism (10) is disposed inside the annular space (1026); and
the first opening (1022) is disposed at a first end (1021) of the outer housing (1025).

10. The optical cable connection apparatus (1) according to any one of claims 2 to 8, wherein the second connection assembly (201) comprises a pre-connector (2011), one end of the pre-connector (2011) is inserted into and connected to the other end of the adapter (1011), and the other end of the pre-connector (2011) is connected to the drop optical cable (5).

11. The optical cable connection apparatus (1) according to claim 2, wherein the second connection mechanism (20) comprises a second housing (202), the second connection assembly (201) is located inside the second housing (202), one end of the second housing (202) comprises a second opening (2021) through which the drop optical cable (5) passes, and the other end of the second housing (202) is detachably connected to the first section (1031) located outside the first housing (102).

12. The optical cable connection apparatus (1) according to claim 11, wherein the device further comprises a cover body (30);
when the first connection mechanism (10) is connected to the second connection mechanism (20), the cover body (30) is detachably connected to an end that is of the second housing (202) and that is away from the first connection mechanism (10); and
when the first connection mechanism (10) is not connected to the second connection mechanism (20), the cover body (30) is detachably connected to the first section (1031) of the first body structure (103).

## Patentansprüche

1. Optische Kabelverbindungsvorrichtung (1), die zum Verbinden eines externen optischen Kabels (4) und eines optischen Drop-Kabels (5) konfiguriert ist, wobei die Vorrichtung Folgendes umfasst:
einen ersten Verbindungsmechanismus (10) und einen zweiten Verbindungsmechanismus (20), wobei:
der erste Verbindungsmechanismus (10) lösbar mit dem zweiten Verbindungsmechanismus (20) verbunden ist;
der erste Verbindungsmechanismus (10) eine erste Verbindungsbaugruppe (101) umfasst und der zweite Verbindungsmechanismus (20) eine zweite Verbindungsbaugruppe (201) umfasst, wobei ein Ende (1021) der ersten Verbindungsbaugruppe (101) mit dem externen optischen Kabel (4) verbunden ist; und
wenn der erste Verbindungsmechanismus (10) mit dem zweiten Verbindungsmechanismus (20) verbunden ist, ist das andere Ende (1023) der ersten Verbindungsbaugruppe (101) mit einem Ende der zweiten Verbindungsbaugruppe (201) verbunden und das Ende der zweiten Verbindungsbaugruppe (201) ist mit dem optischen Drop-Kabel (5) verbunden.
wobei der erste Verbindungsmechanismus (10) ein erstes Gehäuse (102) umfasst, die erste Verbindungsbaugruppe (101) sich innerhalb des ersten Gehäuses (102) befindet und ein erstes Ende (1021) des ersten Gehäuses (102) umfasst eine erste Öffnung (1022), durch die das externe optische Kabel (4) verläuft;
wobei der erste Verbindungsmechanismus (10) weiterhin eine erste Körperstruktur (103) umfasst, die erste Verbindungsbaugruppe (101) auf der ersten Körperstruktur (103) angeordnet ist und sich ein Ende der ersten Körperstruktur (103) sich im Inneren erstes Gehäuses (102) befindet, das andere Ende der ersten Körperstruktur (103) sich von einem zweiten Ende (1023) des ersten Gehäuses (102) nach außen erstreckt und das zweite Ende (1023) des ersten Gehäuses (102) mit der ersten Körperstruktur (103) verbunden ist; und
der zweite Verbindungsmechanismus (20) lösbar mit dem sich nach außen erstreckenden Ende der ersten Körperstruktur (103) verbunden ist, wobei der zweite Verbindungsmechanismus (20) in einer Gewindeverbindung mit dem sich nach außen erstreckenden Ende der ersten Körperstruktur (103) steht; und
wobei die erste Körperstruktur (103) einen ersten Abschnitt (1031) und einen zweiten Abschnitt (1032) umfasst, der sich innerhalb des ersten Gehäuses (102) befindet, die erste Verbindungsbaugruppe (101) auf dem ersten Abschnitt (1031) angeordnet ist, der zweite Abschnitt (1032) ein erstes Durchgangsloch (10321) aufweist, durch das das externe optische Kabel (4) verläuft, und das erste Durchgangsloch mit der ersten Öffnung (1022) verbunden ist; und
ein Teil des ersten Abschnitts (1031) sich innerhalb des ersten Gehäuses (102) befindet und mit dem zweiten Ende (1023) des ersten Gehäuses (102) verbunden ist, und ein Teil des ersten Abschnitts (1031) sich außerhalb des ersten Gehäuses (102) befindet.

2. Optische Kabelverbindungsvorrichtung (1) nach Anspruch 1, wobei die erste Verbindungsbaugruppe (101) einen Adapter (1011) und einen Verbinder (1012) umfasst, wobei ein Ende des Verbinders (1012) in das andere Ende des Verbinders eingeführt und mit einem Ende des Adapters (1011) verbunden wird, wobei das andere Ende des Verbinders (1012) mit einer Anschlussfaser (10121) ausgestattet ist und das externe optische Kabel (4) durch die erste Öffnung (1022) verläuft und mit der Anschlussfaser verbunden ist; und
das andere Ende des Adapters (1011) zur Verbindung mit dem einen Ende der zweiten Verbindungsbaugruppe (201) konfiguriert ist.

3. Optische Kabelverbindungsvorrichtung (1) nach Anspruch 2, wobei der zweite Abschnitt (1032) ein Übergangselement (10322) und ein Stützelement (10323) umfasst und das Stützelement gegen eine Außenseite des Übergangselements gedrückt wird.

4. Verbindungsvorrichtung (1) für optische Kabel nach Anspruch 3, wobei das Stützelement (10323) eine Vielzahl von Verstärkungsrippen (103231) umfasst, sich ein Keil (103221) in einer äußeren Seitenwand des Übergangselements (10322) befindet und die Verstärkungsrippe zwischen zwei benachbarten Keilen angeordnet ist.

5. Optische Kabelverbindungsvorrichtung (1) nach Anspruch 2, wobei ein Befestigungselement (1033) ferner an einem Ende des zweiten Abschnitts (1032) und entfernt vom ersten Abschnitt (1031) angeordnet ist, wobei das Befestigungselement (1033) ein erstes Dichtungselement (10331) und eine Vielzahl von ersten Verbindungsplatten (10332) umfasst, die auf einer Außenseite des ersten Dichtungselements angeordnet sind, und die ersten Verbindungsplatten entlang einer Umfangsrichtung des Befestigungselements (1033) angeordnet sind; und
ein zweites Durchgangsloch (103311) auf dem ersten Dichtungselement (10331) angeordnet ist, wobei ein Ende des zweiten Durchgangslochs mit der ersten Öffnung (1022) verbunden ist und das andere Ende des zweiten Durchgangslochs mit dem ersten Durchgangsloch (10321) verbunden ist.

6. Optische Kabelverbindungsvorrichtung (1) nach Anspruch 2, wobei eine Übergangsplatte (1034) zwischen dem ersten Abschnitt (1031) und dem zweiten Abschnitt (1032) verbunden ist und mindestens ein Befestigungselement (1035) auf der Übergangsplatte (1034) angeordnet ist; und
die Anschlussfaser (10121) um das Befestigungselement (1035) gewickelt ist, oder das externe optische Kabel (4) um das Befestigungselement (1035) gewickelt ist, oder sowohl die Anschlussfaser als auch das externe optische Kabel um das Befestigungselement gewickelt (1035) sind.

7. Optische Kabelverbindungsvorrichtung (1) nach Anspruch 6, wobei ein Spalt (10341) ferner an einer Position der Übergangsplatte (1034) nahe dem Befestigungselement (1035) angeordnet ist und der Spalt verwendet wird, um den Durchgang der Anschlussfaser (10121) oder des externen optischen Kabels (4) von einer Seite der Übergangsplatte (1034) zur anderen Seite der Übergangsplatte (1034) zu ermöglichen.

8. Optische Kabelverbindungsvorrichtung (1) nach Anspruch 2, wobei die Anschlussfaser (10121) unter Verwendung eines Spleißchips geschlossen und mit dem externen optischen Kabel (4) verbunden wird.

9. Optische Kabelverbindungsvorrichtung (1) nach einem der Ansprüche 1 bis 8, wobei das erste Gehäuse (102) ein Innengehäuse (1024) und ein Außengehäuse (1025) umfasst, das außerhalb des Innengehäuses (1024) ummantelt ist, wobei zwischen dem Außengehäuse (1025) und dem Innengehäuse (1024) ein ringförmiger Raum (1026) gebildet ist und eine Spule (1027) zum Lokalisieren des ersten Verbindungsmechanismus (10) innerhalb des ringförmigen Raums (1026) angeordnet ist; und die erste Öffnung (1022) an einem ersten Ende (1021) des Außengehäuses (1025) angeordnet ist.

10. Optische Kabelverbindungsvorrichtung (1) nach einem der Ansprüche 2 bis 8, wobei die zweite Verbindungsbaugruppe (201) einen Vorverbinder (2011) umfasst, in den ein Ende des Vorverbinders (2011) eingeführt und angeschlossen wird mit dem anderen Ende des Adapters (1011) und das andere Ende des Vorsteckers (2011) ist mit dem optischen Drop-Kabel (5) verbunden.

11. Die optische Kabelverbindungsvorrichtung (1) nach Anspruch 2, wobei der zweite Verbindungsmechanismus (20) ein zweites Gehäuse (202) umfasst, die zweite Verbindungsbaugruppe (201) sich innerhalb des zweiten Gehäuses (202) befindet, ein Ende des zweiten Gehäuses (202) eine zweite Öffnung (2021) umfasst, durch die das optische Drop-Kabel (5) verläuft, und das andere Ende des zweiten Gehäuses (202) lösbar mit dem ersten Abschnitt (1031) verbunden ist, der sich außerhalb des ersten Gehäuses (102) befindet.

12. Optische Kabelverbindungsvorrichtung (1) nach Anspruch 11, wobei die Vorrichtung außerdem einen Abdeckkörper (30) umfasst;
wenn der erste Verbindungsmechanismus (10) mit dem zweiten Verbindungsmechanismus (20) verbunden ist, wird der Abdeckkörper (30) lösbar mit einem Ende des zweiten Gehäuses (202) verbunden, das vom ersten Verbindungsmechanismus (10) entfernt ist; und
wenn der erste Verbindungsmechanismus (10) nicht mit dem zweiten Verbindungsmechanismus (20) verbunden ist, der Abdeckkörper (30) lösbar mit dem ersten Abschnitt (1031) der ersten Körperstruktur (103) verbunden ist.

## Revendications

1. Appareil de connexion de câble optique (1), conçu pour relier un câble optique externe (4) et un câble optique de dérivation (5), l'appareil comprenant :
un premier mécanisme de connexion (10) et un second mécanisme de connexion (20), où :
le premier mécanisme de connexion (10) est relié de manière amovible au second mécanisme de connexion (20) ;
le premier mécanisme de connexion (10) comprend un premier ensemble de connexion (101), et le second mécanisme de connexion (20) comprend un second ensemble de connexion (201), dans lequel une extrémité (1021) du premier ensemble de connexion (101) est reliée au câble optique externe (4) ; et
lorsque le premier mécanisme de connexion (10) est relié au second mécanisme de connexion (20), l'autre extrémité (1023) du premier ensemble de connexion (101) est reliée à une extrémité du second ensemble de connexion (201), et l'autre l'extrémité du second ensemble de connexion (201) est reliée au câble optique de dérivation (5) ;
dans lequel le premier mécanisme de connexion (10) comprend un premier logement (102), le premier ensemble de connexion (101) est situé à l'intérieur du premier logement (102), et une première extrémité (1021) du premier logement (102) comprend une première ouverture (1022) à travers laquelle passe le câble optique externe (4) ;
dans lequel le premier mécanisme de connexion (10) comprend en outre une première structure de corps (103), le premier ensemble de connexion (101) est placé sur la première structure de corps (103), une extrémité de la première structure de corps (103) est située à l'intérieur du premier logement (102), l'autre extrémité de la première structure de corps (103) se prolonge vers l'extérieur à partir d'une seconde extrémité (1023) du premier logement (102), et la seconde extrémité (1023) du premier logement (102) est reliée à la première structure de corps (103) ; et
le second mécanisme de connexion (20) est relié de manière amovible à l'extrémité de la première structure de corps (103) se prolongeant vers l'extérieur, le second mécanisme de connexion (20) est dans une connexion filetée avec l'extrémité de la première structure de corps (103) se prolongeant vers l'extérieur ; et
dans lequel la première structure de corps (103) comprend une première section (1031) et une seconde section (1032) qui est située à l'intérieur du premier logement (102), le premier ensemble de connexion (101) est placé sur la première section (1031), la seconde section (1032) présente un premier trou traversant (10321) à travers lequel passe le câble optique externe (4), et le premier trou traversant est relié à la première ouverture (1022) ; et
une partie de la première section (1031) est située à l'intérieur du premier logement (102) et est reliée à la seconde extrémité (1023) du premier logement (102), et une partie de la première section (1031) est située à l'extérieur du premier logement (102).

2. Appareil de connexion de câble optique (1) selon la revendication 1, dans lequel le premier ensemble de connexion (101) comprend un adaptateur (1011) et un connecteur (1012), une extrémité du connecteur (1012) est insérée dans et reliée à une extrémité de l'adaptateur (1011), l'autre extrémité du connecteur (1012) est équipée d'une fibre amorce (10121), et le câble optique externe (4) passe à travers la première ouverture (1022) et est relié à la fibre amorce ; et
l'autre extrémité de l'adaptateur (1011) est conçue pour se relier à la première extrémité du second ensemble de connexion (201) .

3. Appareil de connexion de câble optique (1) selon la revendication 2, dans lequel la seconde section (1032) comprend un élément de transition (10322) et un élément de support (10323), et l'élément de support est pressé contre un côté externe de l'élément de transition.

4. Appareil de connexion de câble optique (1) selon la revendication 3, dans lequel l'élément de support (10323) comprend une pluralité de nervures de renforcement (103231), il y a un coin (103221) dans une paroi latérale externe de l'élément de transition (10322), et la nervure de renfort est placée entre deux coins adjacents.

5. Appareil de connexion de câble optique (1) selon la revendication 2, dans lequel un dispositif de fixation (1033) est également placé sur une extrémité qui appartient à la seconde section (1032) et qui est éloignée de la première section (1031), le dispositif de fixation (1033) comprend un premier élément d'étanchéité (10331) et une pluralité de premières plaques de connexion (10332) placées sur un côté externe du premier élément d'étanchéité, et les premières plaques de connexion sont placées le long d'une direction circonférentielle du dispositif de fixation (1033) ; et
un second trou traversant (103311) est placé sur le premier élément d'étanchéité (10331), une extrémité du second trou traversant étant reliée à la première ouverture (1022), et l'autre extrémité du second trou traversant est reliée au premier trou traversant (10321).

6. Appareil de connexion de câble optique (1) selon la revendication 2, dans lequel une plaque de transition (1034) est reliée entre la première section (1031) et la seconde section (1032), et au moins un élément de fixation (1035) est placé sur la plaque de transition (1034) ; et
la fibre amorce (10121) est enroulée autour de l'élément de fixation (1035), ou le câble optique externe (4) est enroulé autour de l'élément de fixation (1035), ou à la fois la fibre amorce et le câble optique externe sont enroulés autour de l'élément de fixation (1035).

7. Appareil de connexion de câble optique (1) selon la revendication 6, dans lequel un espace (10341) est également formé au niveau d'une position de la plaque de transition (1034) proche de l'élément de fixation (1035), et l'espace est utilisé pour permettre à la fibre amorce (10121) ou au câble optique externe (4) de passer d'un côté de la plaque de transition (1034) à l'autre côté de la plaque de transition (1034) .

8. Appareil de connexion de câble optique (1) selon la revendication 2, dans lequel la fibre amorce (10121) est épissée et reliée au câble optique externe (4) à l'aide d'une puce d'épissage.

9. Appareil de connexion de câble optique (1) selon l'une quelconque des revendications 1 à 8, dans lequel le premier logement (102) comprend un logement interne (1024) et un logement externe (1025) emmanché à l'extérieur du logement interne (1024), un espace annulaire (1026) est formé entre le logement externe (1025) et le logement interne (1024), et une bobine (1027) pour localiser le premier mécanisme de connexion (10) est placée à l'intérieur de l'espace annulaire (1026) ; et
la première ouverture (1022) est placée au niveau d'une première extrémité (1021) du logement externe (1025).

10. Appareil de connexion de câble optique (1) selon l'une quelconque des revendications 2 à 8, dans lequel le second ensemble de connexion (201) comprend un pré-connecteur (2011), une extrémité du pré-connecteur (2011) est insérée dans et reliée à l'autre extrémité de l'adaptateur (1011), et l'autre extrémité du pré-connecteur (2011) est reliée au câble optique de dérivation (5).

11. Appareil de connexion de câble optique (1) selon la revendication 2, dans lequel le second mécanisme de connexion (20) comprend un second logement (202), le second ensemble de connexion (201) est situé à l'intérieur du second logement (202), une extrémité du le second logement (202) comprend une seconde ouverture (2021) à travers laquelle passe le câble optique de dérivation (5), et l'autre extrémité du second logement (202) est reliée de manière amovible à la première section (1031) située à l'extérieur du premier logement (102).

12. Appareil de connexion de câble optique (1) selon la revendication 11, dans lequel le dispositif comprend également un corps de couvercle (30) ;
lorsque le premier mécanisme de connexion (10) est relié au second mécanisme de connexion (20), le corps de couvercle (30) est relié de manière amovible à une extrémité qui appartient au second logement (202) et qui est éloignée du premier mécanisme de connexion (10) ; et
lorsque le premier mécanisme de connexion (10) n'est pas relié au second mécanisme de connexion (20), le corps de couvercle (30) est relié de manière amovible à la première section (1031) de la première structure de corps (103).
